# EUROPEAN PATENT SPECIFICATION

(11) **EP 3 846 318 B1**
(45) Date of publication and mention of the grant of the patent: **09.12.2026**
(21) Application number: 19854152.6
(22) Date of filing: 14.08.2019
(51) Int. Cl.: H02K 1/14, H02K 1/02, H02K 15/02

(54) **SEGMENT CORE AND AXIAL FLUX MOTOR**
SEGMENTKERN UND AXIALFLUSSMOTOR
NOYAU DE SEGMENT ET MOTEUR À FLUX AXIAL

(30) Priority: 31.08.2018 CN 201811008331; 31.08.2018 CN 201811008350
(43) Date of publication of application: 07.07.2021
(73) Proprietor: Zhejiang Pangood Power Technology Co., Ltd., Jinhua, Zhejiang 321102 (CN)
(72) Inventor: TANG, Lei, Jinhua, Zhejiang 321102 (CN); LI, Yixiong, Jinhua, Zhejiang 321102 (CN)
(74) Representative: advotec.
(86) International application number: PCT/CN2019/100587
(87) International publication number: WO 2020/042912

(56) References cited:
- CN-A- 101 783 537
- CN-A- 105 262 247
- CN-A- 108 696 005
- CN-A- 108 736 597
- CN-U- 206 461 445
- CN-U- 208 674 978
- CN-U- 209 001 686
- JP-A- 2000 184 628
- KR-B1- 101 406 360
- US-A1- 2007 222 306
- US-A1- 2011 309 726
- US-A1- 2016 156 255
- US-A1- 2017 250 580

## Description

This application claims priority to Chinese Patent Application No. 201811008331.4, titled "SEGMENT CORE AND AXIAL FLUX MOTOR" and Chinese Patent Application No. 201811008350.7, titled "SEGMENT CORE AND AXIAL FLUX MOTOR", filed on August 31, 2018 with the Chine National Intellectual Property Administration (CNIPA).

### TECHNICAL FIELD

The present disclosure relates to the technical field of motor, and particularly, to a pancake motor.

### BACKGROUND

A pancake core of a pancake motor is classified into an overall core and a segmented core. For most pancake motor structures with an intermediate single stator, the pancake core is a segmented core.

At present, the segmented core is generally formed by stacking silicon steel sheets with different sectional dimensions or by adopting a soft magnetic composite (SMC) integral molding method. In case that the silicon steel sheets with different sectional dimensions are laminated, a large number of specifications of silicon steel sheets lead to a need for a large number of specifications of molds, which increases processing difficulty. In some cases the SMC integral molding method is adopted. Although it is easy to mold, electromagnetic performance of an SMC material is poor, which results in poor magnetic permeability and large loss.

Therefore, how to improve the electromagnetic performance while reducing manufacturing difficulty of the segmented core has become a technical problem to be solved urgently by those skilled in the art.

Patent Application US 2017 / 0 250 580 A1 discloses a stator of a planar type motor and a planar type motor using the same, which are easy to manufacture and are capable of reducing core losses, thereby maximizing motor performance. First cores that are difficult to form by stacking electrical steel plates are formed of soft magnetic powders, and second cores that are formed by stacking electrical steel plates having the same size are arranged in a region where a vortex is concentrated, thereby allowing easy manufacture and being capable of maximizing the performance of the planar type motor.

Patent Application KR 101 406 360 B1 discloses a motor core including a motor core winding unit formed by combining a plurality of components which are manufactured as a soft magnetic powder; and a soft magnetic coating layer for coating the external of the winding unit, consisting of the main component of Fe, and including 1.5-6.5 wt% of Si, 0.1-3 wt% of Al, and 0.1-3 wt% of Mn.

Patent Application US 2016 / 0 156 255 A1 discloses a motor, where the stator core 12 includes: a first integration type core portion 30 that is integrally formed by compression-molding amorphous metal powders in a mold, and on which a first coil 16 is wound; a second integration type core portion 40 that is integrally formed by compression-molding amorphous metal powders in a mold, and on which a second coil 18 is wound; and a lamination type core portion 50 that is formed by laminating a plurality of iron pieces into which the first integration type core portion 30 and the second integration type core portion 40 are press-fitted and that forms a magnetic path.

Patent Application US 2011 / 0 309 726 A1 discloses a permanent magnet electric machine, where coil cores for electric machines are frequently made from steel laminations...a new technique is meeting with some success employing soft-iron particles coated with insulation and moulded to a desired shape (soft magnetic composites-SMC), being bound together by the resinous insulation. A high-pressure compaction process is used to mould the component into a complex shape, capable of producing three-dimensional magnetic flux patterns with an excellent form factor and enabling a high fill factor winding to be employed, wound straight onto SMC teeth.

Patent Application US 2007 / 0 222 306 A1 discloses a core for an electrical machine, a method for producing a core, an electrical machine, and a method for producing an electrical machine. Said core comprises a body of soft magnetic material having a plurality of teeth and at least one magnetic flux cross section area enlarging element being made from a composite of a soft magnetic powder and a binder, said magnetic flux area enlarging element being arranged onto a tooth of said body.

### SUMMARY

In view of above, a technical problem to be solved in the present disclosure is how to improve electromagnetic performance while reducing manufacturing difficulty of a segmented core. To this end, a pancake motor are provided in the present disclosure.

The invention is set out in the appended set of claims..

It can be seen from the above technical solutions that in the segmented core of the present disclosure, the SMC core is adopted to coat the periphery of the laminated core. A shape that is not easy to process is formed by processing the SMC core that is easy to be molded. An overall structure of the laminated core is relatively simple. Therefore, specifications of molds for processing the laminated core are less, and the molds are easy to be processed, which reduces processing difficulty of the segmented core. Moreover, electromagnetic performance of the segmented core is higher than that of core with only the SMC material, and an utilization rate of the core is higher than that of core with only the laminated core.

### BRIEF DESCRIPTION OF THE DRAWINGS

In order to more clearly illustrate the embodiments of the present disclosure or the technical solutions in the prior art, the drawings used in the description of the embodiments or the prior art will be briefly introduced below. Obviously, the drawings in the following description are merely some embodiments of the present disclosure. For those of ordinary skill in the art, other drawings can be obtained according to the provided drawings without paying creative labor.
Figure 1 is an exploded structure diagram of a segmented core according to an embodiment of the present disclosure;
Figure 2 is a stereochemical structure diagram of a segmented core after being spliced according to an embodiment of the present disclosure;
Figure 3 is a stereochemical structure diagram of a first SMC core according to an embodiment of the present disclosure;
Figure 4 is an exploded structure diagram of another segmented core according to an embodiment of the present disclosure;
Figure 5 is an exploded structure diagram of another segmented core according to an embodiment of the present disclosure;
Figure 6 is a stereochemical structure diagram of another segmented core after being spliced according to an embodiment of the present disclosure;
Figure 7 is an exploded structure diagram of another segmented core according to an embodiment of the present disclosure;
Figure 8 is a stereochemical structure diagram of another segmented core after being spliced according to an embodiment of the present disclosure;
Figure 9 is a stereochemical structure diagram of a pancake motor according to an embodiment of the present disclosure;
Figure 10 is an exploded structure diagram of another pancake motor according to an embodiment of the present disclosure;
Figure 11 is a stereochemical structure diagram of another pancake motor according to an embodiment of the present disclosure;
Figure 12 is a stereochemical structure diagram of another SMC core structure according to an embodiment of the present disclosure;
Figure 13 is an exploded structure diagram of another segmented core according to an embodiment of the present disclosure; and
Figure 14 is an exploded structure diagram of another segmented core according to an embodiment of the present disclosure.

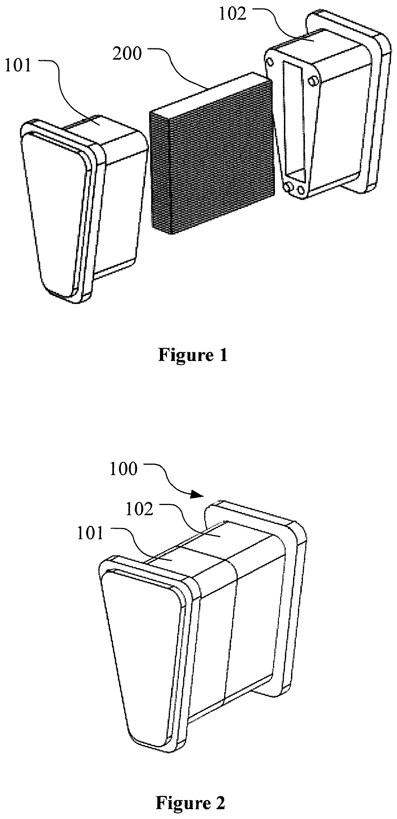

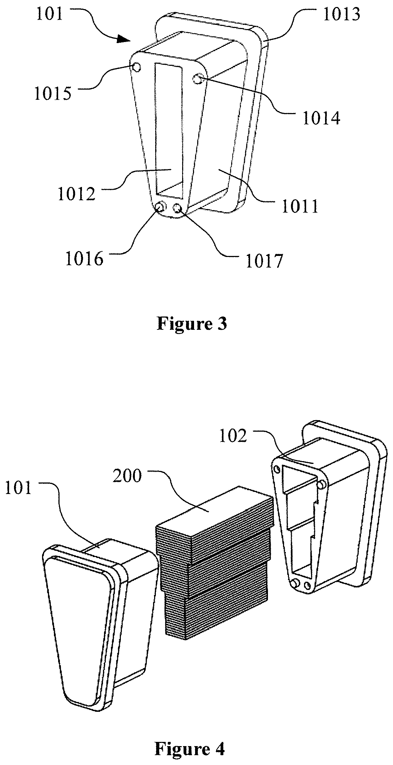

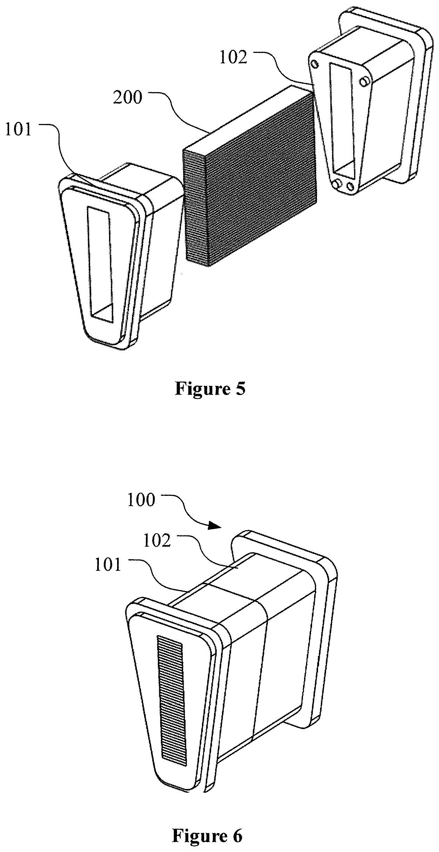

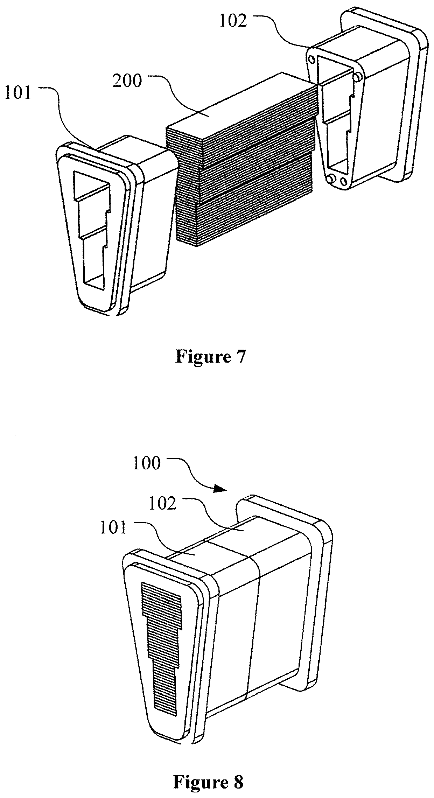

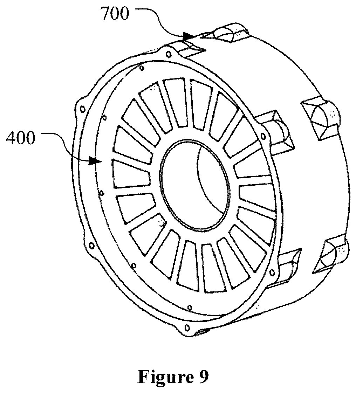

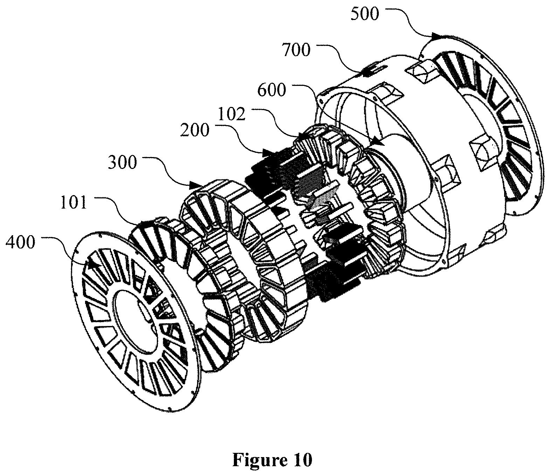

In Figures 1 to 10, 100 is an SMC core, 200 is a laminated core, 300 is a coil, 400 is a first stator splint, 500 is a second stator splint, 600 is a stator inner support, 700 is a casing, 101 is a first SMC core, and 102 is a second SMC core, 1011 is an SMC winding bar, 1012 is an SMC embedded groove, 1013 is an SMC pole shoe, 1014 is a first positioning protrusion, 1015 is a first positioning hole, 1016 is a second positioning protrusion, 1017 is a second positioning hole.

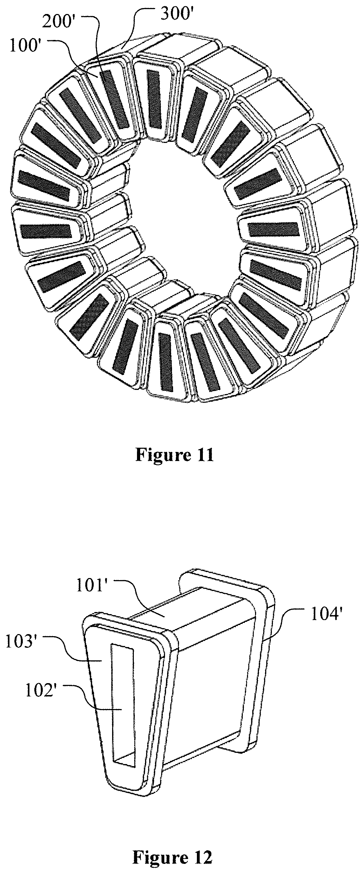

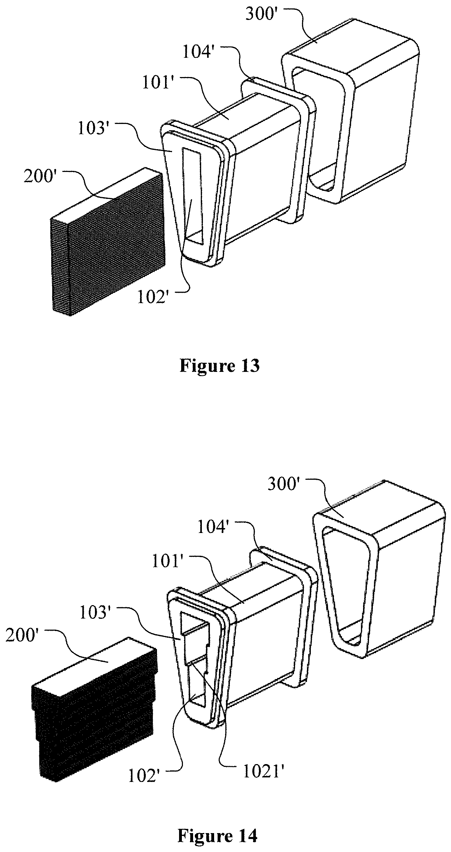

In Figures 11 to 14, 100' is the SMC core, 200' is the laminated core, 300' is the coil, 101' is the SMC winding bar, 102' is the SMC embedded groove, 103' is a first SMC pole shoe, 104' is a second SMC pole piece, 1021' is a step.

### DETAILED DESCRIPTION

Pancake motor: a pancake motor is also called an axial flux motor, and a direction of a magnetic field inside the motor is along an axial direction. Since the axial field motor is generally flat, it is also called a pancake motor.

SMC: a soft magnetic composite which is a magnetic core made by pressing iron powder coated with a special insulating material, and which may be manufactured into a flexible shape according to an actual need.

To this end, a core of the present disclosure is to provide a segmented core and a pancake motor, to improve electromagnetic performance while reducing manufacturing difficulty of the segmented core.

In addition, embodiments shown below do not intend to limit content of the invention described in the claims in any way. Furthermore, all contents of configurations shown in the following embodiments are not limited to necessary features for solutions of the invention described in the claims.

Please refer to Figures 1 to 10, a segmented core disclosed in the embodiments of the present disclosure includes a laminated core 200 and an SMC core 100. The SMC core 100 is coated on a periphery of the laminated core 200 by splicing, and the SMC core is installed inside a prefabricated coil by splicing or a coil is directly wound around a periphery of the SMC core.

In the segmented core in the present disclosure, the SMC core 100 is adopted to coat the periphery of the laminated core 200. A shape that is not easy to process is formed by processing the SMC core 100 that is easy to be molded. An overall structure of the laminated core 200 is relatively simple. Therefore, specifications of molds for processing the laminated core 200 are less, and the molds are easy to be processed, which reduces processing difficulty of the segmented core. Moreover, electromagnetic performance of the segmented core is higher than that of core with only the SMC material, and an utilization rate of the core is higher than that of core with only the laminated core 200.

In addition, since the SMC core 100 is a spliced structure, the SMC core 100 is installed inside a prefabricated coil such as a preformed coil of flat type copper wire by splicing, thereby avoiding a need for winding and improving production efficiency. Alternatively, the coil is directly wound around the periphery of the SMC core 100.

It should be noted that in the embodiments of the present disclosure, the SMC core 100 may coat the entire exterior of the laminated core 200, and the laminated core 200 is all located inside the SMC core 100. The SMC core 100 coats the periphery of the laminated core 200, and two ends of the laminated core 200 are not coated. The SMC core 100 coats the entire periphery or part of the periphery of the laminated core 200. When a part of the periphery is coated, a part of the laminated core 200 is exposed. There may be one concentrated part of the laminated core 200 that is exposed to outside, or the two ends of the laminated core 200 have parts that are both exposed to the outside.

The segmented core 100 includes a first SMC core 101 and a second SMC core 102, the first SMC core 101 and the second SMC core 102 are coated on the entire periphery of the laminated core 200 by splicing, and the first SMC core 101 and the second SMC core 102 are installed inside the prefabricated coil 300 (such as a preformed coil of flat type copper wire) by splicing or the coil 300 is directly wound around the periphery of the SMC core 100. In order to ensure entire electromagnetic performance, a shape of the SMC embedded groove 1012 fits a shape of the laminated core 200 in the embodiments of the present disclosure, for example, the SMC embedded groove 1012 has a rectangular structure; or the SMC embedded groove 1012 is provided with a plurality of steps.

Structures of the first SMC core 101 and the second SMC core 102 are the same or different. Take the first SMC core 101 as an example, the first SMC core 101 includes an SMC winding bar 1011 and the SMC embedded groove 1012 adapted to the laminated core 200, and the SMC embedded groove 1012 is a non-through structure or a through structure. After the first SMC core 101 and the second SMC core 102 are butted, the embedded groove in the first SMC core 101 is butted with an embedded groove in the second SMC core 102, and in this way an appearance structure of the entire laminated core 200 is spliced.

In order to optimize the above solution, an SMC pole shoe 1013 is provided at one end of the SMC winding bar 1011 away from the SMC embedded groove 1012. In order to enable the first SMC core 101 and the second SMC core 102 to be butted in a correct position, one end of the SMC winding bar 1011 close to the SMC embedded groove 1012 is provided with a first positioning protrusion 1014 and/or a first positioning hole 1015 adapted to the second SMC core 102. When butting, the first positioning protrusion 1014 of the first SMC core 101 is matched with the first positioning hole 1015 of the second SMC core 102, and the first positioning hole 1015 of the first SMC core 101 is matched with a first positioning protrusion 1014 of the second SMC core 102.

In other words, the first SMC core 101 may be provided with only one of the first positioning protrusion 1014 and the first positioning hole 1015, or may be provided with both the first positioning protrusion 1014 and the first positioning hole 1015. The second SMC core 102 may be provided with a corresponding structure to match the first positioning protrusion 1014 and/or the first positioning hole 1015 of the first SMC core 101.

Furthermore, one end of the SMC winding bar 1011 close to the SMC embedded groove 1012 is provided with a second positioning protrusion 1016 and/or a second positioning hole 1017 adapted to the second SMC core 102. When butting, the first positioning protrusion 1014 of the first SMC core 101 is matched with a second positioning hole 1017 of the second SMC core 102, and the second positioning hole 1017 of the first SMC core 101 is matched with a second positioning protrusion 1016 of the second SMC core 102.

In other words, the first SMC core 101 may be provided with only one of the second positioning protrusion 1016 and the second positioning hole 1017, or may be provided with both the second positioning protrusion 1016 and the second positioning hole 1017. The second SMC core 102 may be provided with a corresponding structure to match the second positioning protrusion 1016 and/or the second positioning hole 1017 of the first SMC core 101.

In order to further reduce processing difficulty of the segmented core, in the embodiments of the present disclosure, the first positioning protrusion 1014 and the first positioning hole 1015 are symmetrically arranged, and a size of the first positioning protrusion 1014 is adapted to a size of the first positioning hole 1015. The second positioning protrusion 1016 and the second positioning hole 1017 are symmetrically arranged, and a size of the second positioning protrusion 1016 is adapted to a size of the second positioning hole 1017. With this arrangement, the first SMC core 101 and the second SMC core 102 have the same structure, and the same mold may be used to process both the first SMC core 101 and the second SMC core 102.

The laminated core 200 is formed by a plurality of laminations through laminating, and the laminations are silicon steel sheets or amorphous alloy sheets. In the embodiments of the present disclosure, a structure of a lamination used for laminating the laminated core 200 is simple, for example, the structure may be a rectangular structure for convenient processing. The laminations of the same size may form the lamination core 200 with a rectangular structure during a lamination process.

In addition, in order to further improve the electromagnetic performance of the entire segmented core, the laminated core 200 is formed by multiple segments of laminations in different sizes through laminating. In order to adapt to a shape of the segmented core (usually a trapezoidal structure) to the greatest extent, the greater the number of laminations of different sizes, the better. However, considering the processing difficulty, in the embodiments of the present disclosure, the laminated core 200 is formed by laminating three segments of laminations with gradually smaller sizes. The laminations in each segment have the same size, and adjacent segments have different sizes.

A pancake motor is further provided in the present disclosure, including a first stator splint 400, a segmented core, a stator inner support 600, a second stator splint 500, and a casing 700. Each segmented core is fixed in the casing 700 by the first stator splint 400, the second stator splint 500, and the stator inner support 600. The segmented core is any one of the above segmented cores. Since the above segmented core has the above advantages, the pancake motor including the above segmented core also has corresponding effects, which are not be repeated here.

Please refer to Figures 11 to 14, a segmented core disclosed in the embodiments of the present disclosure includes an SMC core 100' wound around with a coil 300' and a laminated core 200', the SMC core 100' is coated on a periphery of the laminated core 200'.

In the segmented core in the present disclosure, the SMC core 100' is adopted to coat the periphery of the laminated core 200'. A shape that is not easy to process is formed by processing the SMC core 100' that is easy to be molded. An overall structure of the laminated core 200' is relatively simple. Therefore, specifications of molds for processing the laminated core 200' are less, and the molds are easy to be processed, which reduces processing difficulty of the segmented core. Moreover, electromagnetic performance of the segmented core is higher than that of core with only the SMC material, and an utilization rate of the core is higher than that of core with only the laminated core 200'.

It should be noted that in the embodiments of the present disclosure, the SMC core 100' coats a periphery of the laminated core 200', two ends of the laminated core 200' are not coated. The SMC core 100' coats the entire or part of the periphery of the laminated core 200'. When a part of the periphery is coated, a part of the laminated iron core 200' is exposed. There may be one concentrated part of the laminated core 200' that is exposed to outside, or the two ends of the laminated core 200' have parts that are both exposed to the outside.

The SMC core 100' includes an SMC winding bar 101' and an SMC embedded groove 102' arranged on the SMC winding bar 101'. A periphery of the SMC winding bar 101' is configured to set the coil 300', and the laminated core 200' is installed in the SMC embedded groove 102'. In order to ensure entire electromagnetic performance, a shape of the SMC embedded groove 102' fits a periphery of the laminated core 200' in the embodiments of the present disclosure, for example, the SMC embedded groove 102' has a rectangular structure; or the SMC embedded groove 102' is provided with multiple steps 1021'.

In order to optimize the above solution, an end surface of the SMC winding bar 101' is provided with a first SMC pole shoe 103'. Further, an end surface of the SMC winding bar 101' opposite to the end surface provided with the first SMC pole shoe 103' is provided with a second SMC pole shoe 104'.

The laminated core 200' is formed by laminating a plurality of laminations, and the laminations are silicon steel sheets, amorphous alloy sheets, permalloy sheets, or iron-cobalt alloy sheets. In the embodiments of the present disclosure, a structure of a lamination used for laminating the laminated core 200' is simple, for example, the structure may be a rectangular structure for convenient processing. The laminations of the same size may form the lamination core 200' with a rectangular structure during a lamination process.

In addition, in order to further improve the electromagnetic performance of the entire segmented core, the laminated core 200' may be formed by multiple segments of laminations in different sizes through laminating. Preferably, in order to adapt to a shape of the segmented core (usually a trapezoidal structure) to the greatest extent, the greater the number of laminations of different sizes, the better. However, considering the processing difficulty, in the embodiments of the present disclosure, the laminated core 200' is formed by multiple segments of laminations with gradually smaller sizes through laminating. A structure including three segments of laminations is specifically described in the drawings. The laminations in each segment have the same size, and adjacent segments have different sizes.

A pancake motor is further provided in the present disclosure, including any one of the above segmented cores. Since the above segmented core has the above advantages, the pancake motor including the above segmented core also has corresponding effects, which are not be repeated here.

The above embodiments in this specification are described in a progressive manner. Each of the embodiments is mainly focused on describing its differences from other embodiments, and references may be made among these embodiments with respect to the same or similar portions among these embodiments.

## Claims

1. A pancake motor, comprising a first stator splint (400), a segmented core, a stator inner support (600), a second stator splint (500), and a casing (700), each segmented core being fixed in the casing (700) by the first stator splint (400), the second stator splint (500), and the stator inner support (600), wherein the segmented core comprises a laminated core (200, 200') and an SMC core (100, 100') wound around with a coil (300, 300'), the SMC core (100, 100') is coated on a periphery of the laminated core (200, 200'), wherein the laminated core is formed by a plurality of laminations through laminating,
along a laminating direction of the laminated core (200, 200'), a length of the whole SMC core (100, 100') in the direction perpendicular to the laminating direction is gradually increased; and
the SMC core (100, 100') comprises an SMC winding bar (101, 101') and an SMC embedded groove (1012, 102') arranged on the SMC winding bar (101, 101'), wherein a periphery of the SMC winding bar (101, 101') is configured to set the coil (300, 300'), and the laminated core (200, 200') is installed in the SMC embedded groove 1012, 102'), and wherein the SMC embedded groove (1012, 102') is a non-through structure or a through structure.

2. The pancake motor according to claim 1, wherein an end surface of the SMC winding bar (101') is provided with a first SMC pole shoe (103').

3. The pancake motor according to claim 2, wherein an end surface of the SMC winding bar (101') opposite to the end surface provided with the first SMC pole shoe (103') is provided with a second SMC pole shoe (104').

4. The pancake motor according to claim 1, wherein the SMC core (100) is coated on a periphery of the laminated core (200) by splicing, and the SMC core (100) is installed inside a prefabricated coil (300) by splicing or a coil (300) is directly wound around a periphery of the SMC core (100).

5. The pancake motor according to claim 4, wherein the SMC core (100) comprises a first SMC core (101) and a second SMC core (102), the first SMC core (101) and the second SMC core (102) are coated on the periphery of the laminated core (200) by splicing, and the first SMC core (101) and the second SMC core (102) are installed inside the prefabricated coil (300) after being spliced or the coil is directly wound around the periphery of the SMC core (100).

6. The pancake motor according to claim 5, wherein the first SMC core (101) comprises an SMC winding bar (1011) and an SMC embedded groove (1012) adapted to the laminated core (200), and the SMC embedded groove (1012) is a non-through structure or a through structure.

7. The pancake motor according to claim 6, wherein an SMC pole shoe (1013) is provided at one end of the SMC winding bar (1011) away from the SMC embedded groove (1012).

8. The pancake motor according to claim 7, wherein one end of the SMC winding bar (1011) close to the SMC embedded groove (1012) is provided with a first positioning protrusion (1014) and/or a first positioning hole (1015) that is adapted to the second SMC core (102).

9. The pancake motor according to claim 8, wherein the end of the SMC winding bar (1011) that is set with the SMC embedded groove (1012) is provided with a second positioning protrusion (1016) and/or a second positioning hole (1017) that is adapted to the second SMC core (102).

10. The pancake motor according to claim 9, wherein in a case that the first positioning protrusion (1014) and the first positioning hole (1015) are both provided, the first positioning protrusion (1014) and the first positioning hole (1015) are arranged symmetrically, and a size of the first positioning protrusion (1014) is adapted to a size of the first positioning hole (1015); and
in a case that the second positioning protrusion (1016) and the second positioning hole (1017) are both provided, the second positioning protrusion (1016) and the second positioning hole (1017) are arranged symmetrically, and a size of the second positioning protrusion (1016) is adapted to a size of the second positioning hole (1017).

11. The pancake motor according to any one of claims 4 to 10, wherein lamination is a silicon steel sheet or an amorphous alloy sheet.

## Patentansprüche

1. Axialflussmotor, umfassend eine erste Statorhalterung (400), einen segmentierten Kern, eine Statorinnenstütze (600), eine zweite Statorhalterung (500) und ein Gehäuse (700), wobei jeder segmentierte Kern durch die erste Statorhalterung (400), die zweite Statorhalterung (500) und die Statorinnenstütze (600) in dem Gehäuse (700) befestigt ist, wobei der segmentierte Kern einen laminierten Kern (200, 200') und einen mit einer Spule (300, 300') umwickelten, SMC-Kern (100, 100') umfasst, wobei der SMC-Kern (100, 100') auf einem Umfang des laminierten Kerns (200, 200') aufgebracht ist, wobei der laminierte Kern (200, 200') durch Laminieren aus einer Vielzahl von Kernblechen ausgebildet ist und entlang einer Laminierrichtung des laminierten Kerns (200, 200') eine Länge des gesamten SMC-Kerns (100, 100') in der Richtung senkrecht zu der Laminierrichtung graduell zunimmt; und der SMC-Kern (100, 100') einen SMC-Wicklungssteg (101, 101') und eine an dem SMC-Wicklungssteg (101, 101') angeordnete eingebettete SMC-Nut (1012, 102') umfasst, wobei ein Umfang des SMC-Wicklungsstegs (1012, 102') dazu eingerichtet ist, die Spule (300, 300') zu halten, und der laminierte Kern (200, 200') in der eingebetteten SMC-Nut (1012, 102') angebracht ist und wobei die eingebettete SMC-Nut (1012, 102') eine nicht durchgehende Struktur oder eine durchgehende Struktur ist.

2. Axialflussmotor nach Anspruch 1, wobei eine Endfläche des SMC-Wicklungsstegs (101') mit einem ersten SMC-Polschuh (103') versehen ist.

3. Axialflussmotor nach Anspruch 2, wobei eine der mit dem ersten SMC-Polschuh (103') versehenen Endfläche gegenüberliegende Endfläche des SMC-Wicklungsstegs (101') mit einem zweiten SMC-Polschuh (104') versehen ist.

4. Axialflussmotor nach Anspruch 1, wobei der SMC-Kern (100) auf einen Umfang des laminierten Kerns (200) gespleißt ist und der SMC-Kern (100) nach dem Spleißen innerhalb einer vorgefertigten Spule (300) anbringbar ist oder eine Spule (300) direkt um einen Umfang des SMC-Kerns (100) wickelbar ist.

5. Axialflussmotor nach Anspruch 4, wobei der SMC-Kern (100) einen ersten SMC-Kern (101) und einen zweiten SMC-Kern (102) umfasst, wobei der erste SMC-Kern (101) und der zweite SMC-Kern (102) auf den Umfang des laminierten Kerns (200) gespleißt sind und nach dem Spleißen innerhalb einer vorgefertigten Spule (300) anbringbar sind oder die Spule direkt um den Umfang des SMC-Kerns (100) wickelbar ist.

6. Axialflussmotor nach Anspruch 5, wobei der erste SMC-Kern (101) einen SMC-Wicklungssteg (1011) und eine an den laminierten Kern (200) angepasste eingebettete SMC-Nut (1012) umfasst, die eine nicht durgehende Struktur oder eine durchgehende Struktur ist.

7. Axialflussmotor nach Anspruch 6, wobei ein von der eingebetteten SMC-Nut (1012) abgewandtes Ende des SMC-
Wicklungsstegs (1011) mit einem SMC-Polschuh (1013) versehen ist.

8. Axialflussmotor nach Anspruch 7, wobei ein der eingebetteten SMC-Nut (1012) zugewandtes Ende des SMC-Wicklungsstegs (1011) mit einem ersten Positionierungsvorsprung (1014) und/oder einem ersten Positionierungsloch (1015) versehen ist, der bzw. das an den zweiten SMC-Kern (102) angepasst ist.

9. Axialflussmotor nach Anspruch 8, wobei das Ende des SMC-Wicklungsstegs (1011), an dem die eingebettete SMC-Nut (1012) angeordnet ist, mit einem zweiten Positionierungsvorsprung (1016) und/oder einem zweiten Positionierungsloch (1017) versehen ist, der bzw. das an den zweiten SMC-Kern (102) angepasst ist.

10. Axialflussmotor nach Anspruch 9, wobei in einem Fall, dass der erste Positionierungsvorsprung (1014) und das erste Positionierungsloch (1015) beide vorhanden sind, der erste Positionierungsvorsprung (1014) und das erste Positionierungsloch (1015) symmetrisch angeordnet sind und eine Größe des ersten Positionierungsvorsprungs (1014) an eine Größe des ersten Positionierungslochs (1015) angepasst ist; und in einem Fall, dass der zweite Positionierungsvorsprung (1016) und das zweite Positionierungsloch (1017) beide vorhanden sind, der zweite Positionierungsvorsprung (1016) und das zweite Positionierungsloch (1017) symmetrisch angeordnet sind und eine Größe des zweiten Positionierungsvorsprungs (1016) an eine Größe des zweiten Positionierungslochs (1017) angepasst ist.

11. Axialflussmotor nach einem der Ansprüche 4 bis 10, wobei das Kernblech ein Siliziumstahlblech oder ein Blech aus amorpher Legierung ist.

## Revendications

1. Moteur à flux axial, comprenant un premier serre-stator (400), un noyau segmenté, un support intérieur de stator (600), un deuxième serre-stator (500) et un boîtier (700), chaque noyau segmenté étant fixé dans le boîtier (700) par le premier serre-stator (400), le deuxième serre-stator (500) et le support intérieur de stator (600), dans lequel le noyau segmenté comprend un noyau laminé (200, 200') et un noyau en composite magnétique doux (CMD) (100, 100') enroulé d'une bobine (300, 300'), dans lequel le noyau en CMD (100, 100') est appliqué sur une périphérie du noyau laminé (200, 200'), dans lequel le noyau laminé est formé par une pluralité de tôles par lamination, dans lequel le long d'une direction de lamination du noyau laminé (200, 200'), une longueur totale du noyau en CMD (100, 100') dans la direction perpendiculaire à la direction de lamination est graduellement augmentée ; et le noyau en CMD (100, 100') comprend une barre d'enroulement en CMD (101, 101') et une rainure encastrée en CMD (1012, 102') disposée sur la barre d'enroulement en CMD (101, 101'), dans lequel une périphérie de la barre d'enroulement en CMD (101, 101') est configurée pour recevoir la bobine (300, 300') et le noyau laminé (200, 200') est installé dans la rainure encastrée en CMD (1012, 102') et dans lequel la rainure encastrée en CMD (1012, 102') est une structure non traversante ou une structure traversante.

2. Moteur à flux axial selon la revendication 1, dans lequel une surface d'extrémité de la barre d'enroulement en CMD (101') est munie d'un premier épanouissement polaire en CMD (103').

3. Moteur à flux axial selon la revendication 2, dans lequel une surface d'extrémité de la barre d'enroulement en CMD (101') opposée à la surface d'extrémité munie du premier épanouissement polaire en CMD (103') est munie d'un deuxième épanouissement polaire en CMD (104').

4. Moteur à flux axial selon la revendication 1, dans lequel le noyau en CMD (100) est appliqué sur une périphérie du noyau laminé (200) par épissure et le noyau en CMD (100) est installé à l'intérieur d'une bobine (300) préfabriquée par épissure ou une bobine (300) est enroulée directement autour d'une périphérie du noyau en CMD (100).

5. Moteur à flux axial selon la revendication 4, dans lequel le noyau en CMD (100) comprend un premier noyau en CMD (101) et un deuxième noyau en CMD (102), le premier noyau en CMD (101) et le deuxième noyau en CMD (102) sont appliqués sur la périphérie du noyau laminé (200) par épissure et le premier noyau en CMD (101) et le deuxième noyau en CMD (102) sont installés à l'intérieur de la bobine (300) préfabriquée après l'épissure ou la bobine est enroulée directement autour de la périphérie du noyau en CMD (100).

6. Moteur à flux axial selon la revendication 5, dans lequel le premier noyau en CMD (101) comprend une barre d'enroulement en CMD (1011) et une rainure encastrée en CMD (1012) adaptée au noyau laminé (200) et la rainure encastrée en CMD (1012) est une structure non traversante ou une structure traversante.

7. Moteur à flux axial selon la revendication 6, dans lequel un épanouissement polaire en CMD (1013) est prévu à une extrémité de la barre d'enroulement en CMD (1011) loin de la rainure encastrée en CMD (1012).

8. Moteur à flux axial selon la revendication 7, dans lequel une extrémité de la barre d'enroulement en CMD (1011) proche de la rainure encastrée en CMD (1012) est munie d'une première saillie de positionnement (1014) et/ou d'un premier trou de positionnement (1015) qui est adapté(e) au deuxième noyau en CMD (102).

9. Moteur à flux axial selon la revendication 8, dans lequel l'extrémité de la barre d'enroulement en CMD (1011) au niveau de laquelle est prévue la rainure encastrée en CMD (1012) est munie d'une deuxième saillie de positionnement (1016) et/ou d'un deuxième trou de positionnement (1017) qui est adapté(e) au deuxième noyau en CMD (102).

10. Moteur à flux axial selon la revendication 9, dans lequel, dans un
cas où la première saillie de positionnement (1014) et le premier trou de positionnement (1015) sont tous deux prévus, la première saillie de positionnement (1014) et le premier trou de positionnement (1015) sont disposés symétriquement et une taille de la première saillie de positionnement (1014) est adaptée à une taille du premier trou de positionnement (1015) ; et
dans un cas où la deuxième saillie de positionnement (1016) et le deuxième trou de positionnement (1017) sont tous deux prévus, la deuxième saillie de positionnement (1016) et le deuxième trou de positionnement (1017) sont disposés symétriquement et une taille de la deuxième saillie de positionnement (1016) est adaptée à une taille du deuxième trou de positionnement (1017).

11. Moteur à flux axial selon l'une quelconque des revendications 4 à 10, dans lequel la tôle est une tôle en acier au silicium ou une tôle en alliage amorphe.
